# EUROPEAN PATENT SPECIFICATION

(11) **EP 1 668 729 B1**
(45) Date of publication and mention of the grant of the patent: **25.04.2018**
(21) Application number: 04783108.6
(22) Date of filing: 03.09.2004
(51) Int. Cl.: H01M 8/023, H01M 8/0234, H01M 8/0239, H01M 8/0243, H01M 8/0245, H01M 8/1018

(54) **FUEL CELL GAS DIFFUSION LAYER**
BRENNSTOFFZELLEN-GAS-DIFFUSIONSSCHICHT
COUCHE DE DIFFUSION DE GAZ DE PILE A COMBUSTIBLE

(30) Priority: 18.09.2003 US 666626
(43) Date of publication of application: 14.06.2006
(73) Proprietor: 3M Innovative Properties Company, St. Paul, MN 55133-3427 (US)
(72) Inventor: MEKALA, David R.,, Saint Paul, MN 55133-3427 (US); STEGINK, David W.,, Saint Paul, MN 55133-3427 (US); DAVID, Moses M.,, Saint Paul, MN 55133-3427 (US); FRISK, Joseph W.,, Saint Paul, MN 55133-3427 (US)
(74) Representative: Vossius & Partner Patentanwälte Rechtsanwälte mbB
(86) International application number: PCT/US2004/028750
(87) International publication number: WO 2005/034271

(56) References cited:
- EP-A- 1 117 142
- EP-A- 1 237 215
- EP-A- 1 284 154
- EP-A- 1 329 970
- WO-A-02/22952
- WO-A-03/058743
- JP-A- H07 211 329
- US-A- 4 287 032
- US-B1- 6 432 510
- PATENT ABSTRACTS OF JAPAN vol. 1999, no. 05, 31 May 1999 (1999-05-31) & JP 11 045733 A (TOSHIBA CORP), 16 February 1999 (1999-02-16)

## Description

This invention relates to gas diffusion layers which may be useful in the manufacture of fuel cells. The gas diffusion layers according to the present disclosure comprise a thin (sub-micron) hydrophilic surface layer overlying a thicker hydrophobic second layer. Methods of manufacturing gas diffusion layers employing plasma treatment according to the invention are also provided.

International Patent Application Publication WO 99/05358 purportedly discloses an industrial fabric comprising synthetic yarns or fibers which have been subjected to plasma treatment. The reference asserts that hydrophilic properties are enhanced by using a plasma containing oxygen, air or ammonia. The reference asserts discloses that hydrophobic properties are enhanced by using a plasma containing a silane, a siloxane or a perfluorocarbon.

European Patent No. 0 479 592 B1 purportedly discloses methods of surface treating fluorochemical members, including fluoroplastic resin sheets, for improved adhesion, including treatment with atmospheric glow plasma.

U.S. Patent No. 5,041,304 purportedly discloses a method for surface treating an article by subjecting the article at its surface to a glow discharge plasma treatment under atmospheric pressure with a gas containing a fluorinated compound, thereby lowering the surface energy of the article, which may impart water repellency to the article surface.

Japan Patent 59-217951 purportedly discloses a fuel cell having an electrode including an electrode substrate treated with an argon plasma, or using nitrogen or another inert gas plasma.

European Patent Application No. EP 1 117 142 A1 purportedly discloses a fuel cell which may include a gas diffusion layer having a water-repelling property. The reference asserts that water-repellency may be imparted by treatment with certain fluorinated silane compounds. The reference asserts that a hydroxyl group may be added to a gas diffusion layer by plasma treatment to serve as a binding site for the fluorinated silane compound.

European Patent No. 0 492 649 B1 purportedly discloses methods of modifying the properties of a textile substrate, which may be a sewing thread, which method may include low temperature plasma treatment with an inert gas or a reactive gas selected from O₂, N₂O, O₃, CO₂, NH₃, SO₂, SiCl₄, CCl₄, CF₃Cl, CF₄, CO, hexamethyldisiloxane and/or H₂.

U.S. Patent No. 5,041,304 purportedly discloses a low pressure gas plasma process wherein small quantities of water vapor are added to the primary gas constituting the plasma.

U.S. Patent No. 5,948,166 discloses a process and apparatus for deposition of a carbon-rich coating onto a moving substrate which employs a carbon-rich plasma.

U.S. Patent Application S.N. 09/997,082 discloses a method of making a hydrophobic carbon fiber construction such as a fuel cell gas diffusion layer comprising the steps of: a) immersing a carbon fiber construction in an aqueous dispersion of a highly fluorinated polymer, typically a perfluorinated polymer; b) contacting the dispersion with a counterelectrode; and c) electrophoretically depositing the highly fluorinated polymer onto the carbon fiber construction by applying electric current between the carbon fiber construction and the counterelectrode.

Briefly, the present application describes a fuel cell gas diffusion layer comprising a hydrophilic surface layer having a thickness of no more than 1 micron, and, thereunder, a hydrophobic second layer comprising a fluoropolymer having a thickness of at least 5 microns. The hydrophobic second layer may comprise dispersed particles of carbon and a fluoropolymer. The fuel cell gas diffusion layer may additionally comprise a supporting third layer underlying the second layer, typically a carbon fiber construction coated with a fluoropolymer. Alternately, the hydrophobic second layer may comprise a carbon fiber construction coated with a fluoropolymer. The hydrophilic surface layer may comprise functional groups containing Si or a metal. The hydrophilic surface layer may comprise functional groups additionally containing O, N or S. The present invention also provides a roll good comprising the fuel cell gas diffusion layer described above. The present invention also provides a fuel cell gas diffusion layer as described above wherein the hydrophilic surface layer is present on less than all of the hydrophobic second layer, according to a maskwork pattern. The present invention provides a method of making a fuel cell gas diffusion layer comprising the steps of a) providing a carbon fiber construction; b) coating at least the upper surface of the carbon fiber construction with composition which comprises a fluoropolymer; and c) exposing the upper surface to at least one plasma so as to generate a hydrophilic surface layer having a thickness of no more than 0.5 micron. The plasma is of species including oxygen, nitrogen, nitrogen dioxide, nitrous oxide, ammonia, sulfur dioxide, silanes, siloxanes and organometallics. Exposure of the upper surface to at least one plasma is carried out in two steps, or more. Exposure of the upper surface to at least one plasma may comprise exposing said upper surface to a plasma of silane (SiH₄), oxygen, and essentially no other species. Exposure of the upper surface to at least one plasma comprises exposing the upper surface to a first plasma and exposing the upper surface to a second plasma. The first plasma is of species including at least one selected from the group consisting of: silanes, siloxanes and organometallics, and the second plasma is of species including at least one selected from the group consisting of: oxygen, nitrogen, nitrogen dioxide, nitrous oxide, ammonia and sulfur dioxide. In addition, the first plasma may additionally include species including at least one selected from the group consisting of: oxygen, nitrogen, nitrogen dioxide, nitrous oxide, ammonia and sulfur dioxide. More typically, the first plasma is of species including a silane, most typically tetramethylsilane, and oxygen, and the second plasma is of species including oxygen. Typically, the step of exposing the upper surface to at least one plasma is carried out at sub-atmospheric pressures. The present disclosure also provides a method additionally comprising the step of partially covering the upper surface with a mask having windows according to a pattern, such that the hydrophilic surface layer is applied according to the pattern. The present disclosure also provides a method wherein the carbon fiber construction is provided as a roll good and the step of exposing said upper surface to at least one plasma is performed in continuous roll-to-roll fashion.

What has not been described in the art, and is provided by the present invention, is a largely hydrophobic fuel cell gas diffusion layer comprising a hydrophilic surface layer for strong and uniform binding of fuel cell catalyst.

In this application:
"highly fluorinated" means containing fluorine in an amount of 40 wt% or more, but typically 50 wt% or more, and more typically 60 wt% or more, and includes perfluorinated.

It is an advantage of the present invention to provide a fuel cell gas diffusion layer with hydrophobic properties that can nonetheless bind catalyst strongly and uniformly on its upper surface.

The fuel cell gas diffusion layer according to the present invention may be used in the fabrication of membrane electrode assemblies (MEA's) for use in fuel cells. An MEA is the central element of a proton exchange membrane fuel cell, such as a hydrogen fuel cell. Fuel cells are electrochemical cells which produce usable electricity by the catalyzed combination of a fuel such as hydrogen and an oxidant such as oxygen. Typical MEA's comprise a polymer electrolyte membrane (PEM) (also known as an ion conductive membrane (ICM)), which functions as a solid electrolyte. One face of the PEM is in contact with an anode electrode layer and the opposite face is in contact with a cathode electrode layer. Each electrode layer includes electrochemical catalysts, typically including platinum metal. Gas diffusion layer layers (GDL's) facilitate gas transport to and from the anode and cathode electrode materials and conduct electrical current. The anode and cathode electrode layers may be applied to GDL's in the form of a catalyst ink, and the resulting coated GDL's sandwiched with a PEM to form a five-layer MEA. The five layers of a five-layer MEA are, in order: anode GDL, anode electrode layer, PEM, cathode electrode layer, and cathode GDL. In a typical PEM fuel cell, protons are formed at the anode via hydrogen oxidation and transported across the PEM to the cathode to react with oxygen, causing electrical current to flow in an external circuit connecting the electrodes. The GDL may also be called a fluid transport layer (FTL) or a diffuser/current collector (DCC).

At catalytic sites on each electrode, it is the GDL that provides both a path of electrical conduction and passage for reactant and product fluids such as hydrogen, oxygen and water. Typically, hydrophobic GDL materials are preferred in order to improve transport of product water away from the catalytic sites of the electrode and prevent "flooding." Applicants have found that the addition of a very thin hydrophilic layer to the upper surface of the GDL can provide an improved uniformity and strength of catalyst binding, resulting in improved fuel cell performance.

Any suitable GDL material may be used in the practice of the present invention. Typically the GDL is comprised of sheet or roll good material comprising carbon fibers. Typically the GDL is a carbon fiber construction selected from woven and non-woven carbon fiber constructions. Carbon fiber constructions which may be useful in the practice of the present invention may include: Toray™ Carbon Paper, SpectraCarb™ Carbon Paper, Zoltelc™ Carbon Cloth, AvCarb™ P50 carbon fiber paper, and the like. Typically, the GDL is coated or impregnated with a hydrophobizing treatment such as a dispersion of a fluoropolymer, typically polytetrafluoroethylene (PTFE). In addition, the upper surface may be finished by coating with a dispersion of carbon particles and a fluoropolymer, typically to a thickness of greater than 5 microns, and most typically to a thickness of 10-30 microns.

The GDL according to the present invention comprises a hydrophilic surface layer having a thickness of no more than 1 micron and typically no more than 0.5 micron. The hydrophilic surface layer lays above a hydrophobic second layer comprising a fluoropolymer, having a thickness of at least 5 microns and more typically at least 25 microns. Typically the hydrophobic second layer comprises at least 0.5 % by weight of the fluoropolymer, more typically at least 1 %, and more typically at least 10%. The hydrophobic second layer may comprise the fluoropolymer-treated carbon fiber construction itself, which may be up to 150 microns thick or more. Alternately, the hydrophobic second layer may comprise a finish layer of dispersed carbon particles and fluoropolymer, typically laying above a supporting third layer, which is typically a fluoropolymer-treated carbon fiber construction. The fluoropolymers recited above are highly fluorinated polymers, and typically perfluorinated polymers, such as polytetrafluoroethylene (PTFE), fluorinated ethylene propylene (FEP), perfluoroalkyl acrylates, hexafluoropropylene copolymers, tetrafluoroethylene/hexafluoropropylene/vinylidene fluoride terpolymers, and the like. Most typically, the fluoropolymers are PTFE.

The hydrophilic surface layer may comprise functional groups containing Si or a metal. More typically the hydrophilic surface layer comprises functional groups containing Si. The hydrophilic surface layer may comprise functional groups additionally containing O, N or S. Typically, the functional groups are derived from ionization products of silanes, including silane (SiH₄), tetramethylsilane and tetraalkyl silanes of mixed or identical alkyl groups, siloxanes and organometallics, including aluminum compounds such as aluminum trichloride, zirconium compounds such as zirconium t-butoxide, titanium compounds such as titanium tetrachloride, copper compounds such as copper hexafluoroacetylacetonate (CuHFAC) and tin compounds such as tetramethyltin. The functional groups may be derived additionally from ionization products of oxygen, nitrogen, nitrogen dioxide, nitrous oxide, ammonia and sulfur dioxide.

The GDL according to the present invention may be provided in sheets, as a roll good, or in any suitable form. The GDL according to the present invention may be patterned, such that the hydrophilic surface layer is present on less than all of the hydrophobic second layer, according to a maskwork pattern. Any suitable pattern may be used.

The GDL according to the present invention may be made by any suitable means. Typically, the GDL according to the present invention is made by a method employing plasma treatment, such as the method described following.

The present invention provides a method of making a fuel cell gas diffusion layer comprising the steps of a) providing a carbon fiber construction; b) coating at least the upper surface of the carbon fiber construction with a composition which comprises a fluoropolymer; and c) exposing the upper surface to at least one plasma so as to generate a hydrophilic surface layer having a thickness of no more than 1 micron. Any suitable carbon fiber construction may be used in the practice of the present invention. Exemplary carbon fiber constructions are described above. Typically, the carbon fiber construction has an average thickness of between 30 and 300 microns, more typically between 100 and 250 microns, and most typically between 150 and 200 microns.

The carbon fiber construction may be coated by any suitable means, including both hand and machine methods, including dipping, spraying, brushing, notch bar coating, fluid bearing die coating, wire-wound rod coating, fluid bearing coating, slot-fed knife coating or three-roll coating. Alternately, electrophoretic deposition may be used, as described in U.S. Patent Application S.N. 09/997,082. Coating may be achieved in one application or in multiple applications.

Any suitable composition which comprises a fluoropolymer may be used. The composition typically comprises a carrier which may be any suitable carrier, which may include organic or inorganic solvents, and which is typically aqueous. The fluoropolymer is a highly fluorinated polymer and typically a perfluorinated polymer, such as polytetrafluoroethylene (PTFE), fluorinated ethylene propylene (FEP), perfluoroalkyl acrylates, hexafluoropropylene copolymers, tetrafluoroethylene/hexafluoropropylene/vinylidene fluoride terpolymers, and the like. Most typically, the fluoropolymer is PTFE. Suitable compositions include Teflon® PTFE 30B colloidal suspension (DuPont Fluoroproducts, Wilmington, Delaware), which may be diluted to 1% with deionized water.

Most typically, the carbon fiber construction is coated throughout by dipping in a dispersion of PTFE in water, and then a finish coat is applied to the upper surface by notch bar coating, the finish coat comprising carbon particles a dispersion of PTFE and carbon particles in water.

Any suitable plasma treatment apparatus may be used. Typically, the apparatus includes a housing capable of containing the carbon fiber construction for treatment and capable of maintaining sub-atmospheric pressures, apparatus for evacuation of the housing and provision of plasma gasses at suitable pressures, and electrodes for plasma generation with an appropriate power source. A suitable apparatus for plasma treatment of roll goods is disclosed in U.S. Patent No. 5,948,166. Typically, the step of exposing the upper surface to at least one plasma is carried out at sub-atmospheric pressures, typically 10-1,000 mtorr, more typically 50-500 mtorr, most typically about 150 mtorr. Typically, the step of exposing the upper surface to at least one plasma is carried out at room temperature. Typically, the step of exposing the upper surface to at least one plasma is carried out with application of 100-500 Watts of power, more typically 200-400 Watts, and most typically about 300 Watts.

The plasma may be of species including oxygen, nitrogen, nitrogen dioxide, nitrous oxide, ammonia, sulfur dioxide, silanes, including silane (SiH₄), tetramethylsilane and tetraalkyl silanes of mixed or identical alkyl groups, siloxanes and organometallics, including aluminum compounds such as aluminum trichloride, zirconium compounds such as zirconium t-butoxide, titanium compounds such as titanium tetrachloride, copper compounds such as copper hexafluoroacetylacetonate (CuHFAC) and tin compounds such as tetramethyltin. Inert gasses may additionally be present during plasma treatment. Exposure of the upper surface to at least one plasma may be carried out in one step, two steps, or more.

In one embodiment including a single plasma treatment step, the upper surface is exposed to a plasma of silane (SiH₄), oxygen, and essentially no other species. Power and duration of exposure are adjusted to provide a hydrophilic surface layer having a thickness of no more than 1 micron.

In a further embodiment, the upper surface is exposed to a first plasma and then a second plasma. Typically the first plasma is of species including at least one selected from the group consisting of: silanes, siloxanes and organometallics, and the second plasma is of species including at least one selected from the group consisting of: oxygen, nitrogen, nitrogen dioxide, nitrous oxide, ammonia and sulfur dioxide. In addition, the first plasma may additionally include species including at least one selected from the group consisting of: oxygen, nitrogen, nitrogen dioxide, nitrous oxide, ammonia and sulfur dioxide. More typically, the first plasma is of species including a silane, most typically tetramethylsilane, and oxygen, and the second plasma is of species including oxygen. Power and duration of exposure are adjusted to provide a hydrophilic surface layer having a thickness of no more than 1 micron.

The present invention also provides a method additionally comprising the step of partially covering the upper surface with a mask having windows according to a pattern, such that the hydrophilic surface layer is applied according to the pattern. The mask may be made of any suitable material, including metals, such as aluminum, and polymers, such as polyester, and the like. Subsequently, the plasma treated GDL is coated with a catalyst-containing composition or ink. Unbound catalyst may then be removed, e.g., by washing, and recovered. This method can result in more efficient use of costly catalyst by eliminating the unnecessary use of catalyst on non-active areas of the GDL.

The carbon fiber construction may alternately be provided as a roll good and the step of exposing said upper surface to at least one plasma performed in continuous roll-to-roll fashion. A suitable apparatus for plasma treatment of roll goods is disclosed in U.S. Patent No. 5,948,166. The apparatus described therein may be adapted by provision of a wider drum (17cm) suitable for GDL production.

Alternately, masking a roll good methods may be used together. IN one embodiment, a roll-length mask is provided and

This invention is useful in the manufacture of fuel cells.

Objects and advantages of this invention are further illustrated by the following examples, but the particular materials and amounts thereof recited in these examples, as well as other conditions and details, should not be construed to unduly limit this invention.

### Examples

Unless otherwise noted, all reagents were obtained or are available from Aldrich Chemical Co., Milwaukee, WI, or may be synthesized by known methods.

### Plasma Reactor

A commercial parallel-plate capacitively coupled reactive ion etcher (commercially available as Model 2480 from PlasmaTherm of St. Petersburg, Florida) was used for plasma treatment of the GDL samples. The treatments occurred while the sample was in an ion sheath that was proximate an electrode. The reactor included a grounded chamber electrode containing a powered electrode. The chamber was cylindrical in shape with an internal diameter of 762 mm (30 inches) and height of 150 mm (6 inches). A circular electrode having a diameter of 686 mm (27 inches) was mounted inside the chamber and attached to a matching network and a 3 kW RF power supply that was operated at a frequency of 13.56 MHz. The chamber was vacuum pumped with a Roots blower backed by a mechanical pump. Unless otherwise stated, the base pressure in the chamber was 0.67 Pa (5 mTorr). Process gases were metered into the chamber either through mass flow controllers or a needle valve. All the plasma treatments were done with the sample located on the powered electrode of the plasma reactor. Pressure in the chamber was controlled independently with a throttle valve and controller before the pump.

### Example 1: Three Step Process

In this example, the plasma treatment of the GDL was done in three separate steps. In the first step, the membrane is primed with an oxygen plasma to enable good adhesion of the silicon containing layer deposited in the second step from a mixture of tetramethylsilane and oxygen. A final, third step was used to convert the hydrophobic methyl groups left behind from the deposition from tetramethylsilane into oxide or hydroxyl groups that render the surface hydophilic.

GDL material (Toray™ Carbon Paper) was clamped in the chamber of the aluminum reactor and the apparatus was sealed. The chamber was evacuated to a pressure of 150 mTorr, oxygen was introduced at a flow rate of 500 sccm (standard cubic centimeters per minute) and a plasma was generated at a power of 300 Watts. The operation was carried out at room temperature. The duration of plasma generation in the first step was 10 seconds. In the second step, oxygen and tetramethyl silane were introduced at flow rates of 500 sccm 50 sccm respectively. The duration of plasma generation in the second step was 20 seconds. In a third step, oxygen gas was again introduced at a flow rate of 500 sccm. The duration of plasma generation in the third step was 30 seconds.

### Example 2: One Step Process

Hydrophilic treatment was accomplished in a single step by choosing a precursor, silane (SiH₄), that does not contain methyl groups.

The same apparatus was used as described above in Example 1.

GDL material (Zoltek™ Carbon Cloth) was clamped in the chamber of the aluminum reactor and the apparatus was sealed. The chamber was evacuated to a pressure of 150 mTorr. A premixed gas containing 2% silane in argon was introduced at a flow rate of 500 sccm along with oxygen, also at a flow rate of 500 sccm. A plasma was generated at a power of 300 Watts. The operation was carried out at room temperature. The duration of plasma generation in the first step was 30 seconds.

### Example 3: Patterned Surface Treatment

GDL material (AvCarb™ P50 carbon fiber paper) was clamped in the chamber of the aluminum reactor and covered with a ¼-inch thick aluminum plate containing square cutouts. The apparatus was sealed. The chamber was evacuated to a pressure of 150 mTorr. A premixed gas containing 2% silane in argon was introduced at a flow rate of 500 sccm along with oxygen, also at a flow rate of 500 sccm. A plasma was generated at a power of 300 Watts. The operation was carried out at room temperature. The duration of plasma generation in the first step was 30 seconds.

The resulting GDL had a hydrophilic coating only in regions corresponding to the square cutouts.

### Example 4: Continuous Surface Treatment with Patterned Surface Treatment

The apparatus for continuous surface treatment described in U.S. Patent No. 5,948,166 was fitted with a larger treatment drum, having a width of 16.5 cm (6.5 inches), and used in the present Example.

A roll of GDL material (AvCarb™ P50 carbon fiber paper) was mounted in the apparatus. A polyester mask having windows cut therein was wrapped around the drum electrode. The apparatus was sealed. The chamber was evacuated to a pressure of 150 mTorr. A premixed gas containing 2% silane in oxygen was introduced at a flow rate of 500 sccm along with oxygen, also at a flow rate of 500 sccm. A plasma was generated at a power of 500 Watts. The operation was carried out at room temperature. The web speed was maintained at 10 feet/min, corresponding to a treatment time of about 30 seconds.

The hydrophilicity of the treated GDL was confirmed by applying water from a dropper along the treated surface. The water wet out nicely and formed a trace along the treated surface and beaded up without wetting on the untreated surface.

### Example 5

MEA's were made from GDL's treated as described in Example 4. The MEA's demonstrated improved performance over MEA's made from comparative GDL's.

## Claims

1. A method of making a fuel cell gas diffusion layer comprising the steps:
a) providing a carbon fiber construction having an upper surface;
b) coating at least said upper surface of said carbon fiber construction with a hydrophobic layer composition which comprises a fluoropolymer;
c) exposing said upper surface to at least one plasma so as to generate a hydrophilic surface layer having a thickness of no more than 0.5 micron, wherein said plasma is of species including at least one selected from the group consisting of: oxygen, nitrogen, nitrogen dioxide, nitrous oxide, ammonia and sulfur dioxide, wherein said step c) comprises steps d) and e):
d) exposing said upper surface to a first plasma; and subsequently
e) exposing said upper surface to a second plasma;
wherein said first plasma is of species including at least one selected from the group consisting of: silanes, siloxanes and organometallics, and wherein said second plasma is of species including at least one selected from the group consisting of: oxygen, nitrogen, nitrogen dioxide, nitrous oxide, ammonia and sulfur dioxide.

2. The method according to claim 1 wherein said first plasma is additionally of species including at least one selected from the group consisting of: oxygen, nitrogen, nitrogen dioxide, nitrous oxide, ammonia and sulfur dioxide.

3. The method according to claim 1 wherein said first plasma is of species including a silane and oxygen and wherein said second plasma is of species including oxygen.

## Patentansprüche

1. Ein Verfahren zum Herstellen einer Brennstoffzellen-Gasdiffusionsschicht, umfassend die Schritte:
a) Bereitstellen einer Kohlenstofffaserkonstruktion mit einer oberen Oberfläche;
b) Beschichten mindestens der oberen Oberfläche der Kohlenstofffaserkonstruktion mit einer Zusammensetzung für eine hydrophobe Schicht, die ein Fluorpolymer umfasst;
c) Aussetzen der oberen Oberfläche gegenüber mindestens einem Plasma, um eine hydrophile Oberflächenschicht mit einer Dicke von nicht mehr als 0,5 Mikrometern zu erzeugen, wobei das Plasma der Spezies angehört, die mindestens eines einschließt, ausgewählt aus der Gruppe bestehend aus: Sauerstoff, Stickstoff, Stickstoffdioxid, Distickstoffoxid, Ammoniak und Schwefeldioxid, wobei Schritt c) die Schritte d) und e) umfasst:
d) Aussetzen der oberen Oberfläche gegenüber einem ersten Plasma; und anschließend
e) Aussetzen der oberen Oberfläche gegenüber einem zweiten Plasma;
wobei das erste Plasma einer Spezies angehört, die mindestens eines einschließt, ausgewählt aus der Gruppe bestehend aus: Silanen, Siloxanen und Organometallverbindungen, und wobei das zweite Plasma einer Spezies angehört, die mindestens eines einschließt, ausgewählt aus der Gruppe bestehend aus: Sauerstoff, Stickstoff, Stickstoffdioxid, Distickstoffoxid, Ammoniak und Schwefeldioxid.

2. Das Verfahren nach Anspruch 1, wobei das erste Plasma außerdem einer Spezies angehört, die mindestens eines einschließt, ausgewählt aus der Gruppe bestehend aus: Sauerstoff, Stickstoff, Stickstoffdioxid, Distickstoffoxid, Ammoniak und Schwefeldioxid.

3. Das Verfahren nach Anspruch 1, wobei das erste Plasma einer Spezies angehört, die Silan und Sauerstoff einschließt, und wobei das zweite Plasma einer Spezies angehört, die Sauerstoff einschließt.

## Revendications

1. Procédé de fabrication d'une couche de diffusion de gaz de pile à combustible comprenant les étapes:
a) fourniture d'une construction en fibre de carbone ayant une surface supérieure ;
b) revêtement d'au moins ladite surface supérieure de ladite construction en fibre de carbone avec une composition de couche hydrophobe qui comprend un fluoropolymère ;
c) exposition de ladite surface supérieure à au moins un plasma de façon à générer une couche de surface hydrophile ayant une épaisseur n'excédant pas 0,5 micromètre, dans lequel ledit plasma est d'une espèce incluant au moins une espèce choisie dans le groupe constitué de : oxygène, azote, dioxyde d'azote, oxyde nitreux, ammoniac et dioxyde de soufre, dans lequel ladite étape c) comprend les étapes d) et e) :
d) exposition de ladite surface supérieure à un premier plasma ; et par la suite
e) exposition de ladite surface supérieure à un deuxième plasma ;
dans lequel ledit premier plasma est d'une espèce incluant au moins une espèce choisie dans le groupe constitué de : silanes, siloxanes et organométalliques, et dans lequel ledit deuxième plasma est d'une espèce incluant au moins une espèce choisie dans le groupe constitué de : oxygène, azote, dioxyde d'azote, oxyde nitreux, ammoniac et dioxyde de soufre.

2. Procédé selon la revendication 1, dans lequel ledit premier plasma est en outre d'une espèce incluant au moins une espèce choisie dans le groupe constitué de : oxygène, azote, dioxyde d'azote, oxyde nitreux, ammoniac et dioxyde de soufre.

3. Procédé selon la revendication 1, dans lequel ledit premier plasma est d'une espèce incluant un silane et de l'oxygène et dans lequel ledit deuxième plasma est d'une espèce incluant de l'oxygène.
